# EUROPÄISCHE PATENTSCHRIFT

(11) **EP 1 363 723 B1**
(45) Veröffentlichungstag und Bekanntmachung des Hinweises auf die Patenterteilung: **22.09.2004**
(21) Anmeldenummer: 02712907.1
(22) Anmeldetag: 13.02.2002
(51) Int. Cl.: B01D 65/02, B01D 65/06

(54) **VERFAHREN UND REINIGUNGDANLAGE ZUM REINIGEN VON MEMBRANMODULEN**
METHOD AND CLEANING SYSTEM FOR CLEANING MEMBRANE MODULES
PROCEDE ET INSTALLATION DE PURIFICATION SERVANT A PURIFIER DES MODULES A MEMBRANE

(30) Priorität: 27.02.2001 EP 01104832
(43) Veröffentlichungstag der Anmeldung: 26.11.2003
(73) Patentinhaber: VA TECH WABAG Deutschland GmbH, 04442 Zwenkau (DE)
(72) Erfinder: KRAFT, Angelika, 40667 Meerbusch (DE); KOHL, Hanna, 04442 Zwenkau (DE); KLEGRAF, Ferdinand, 65345 Rauenthal (DE)
(74) Vertreter: VA TECH Patente GmbH & Co
(86) Internationale Anmeldenummer: PCT/EP2002/001482
(87) Internationale Veröffentlichungsnummer: WO 2002/068102

(56) Entgegenhaltungen:
- PATENT ABSTRACTS OF JAPAN vol. 1998, no. 10, 31. August 1998 (1998-08-31) & JP 10 118469 A (MAEZAWA IND INC), 12. Mai 1998 (1998-05-12)
- PATENT ABSTRACTS OF JAPAN vol. 1997, no. 08, 29. August 1997 (1997-08-29) & JP 09 103660 A (KUBOTA CORP), 22. April 1997 (1997-04-22)

## Beschreibung

Die Erfindung betrifft ein Verfahren zum Reinigen von Membranmodulen, welche in einer Wasserbehandlungsanlage einsetzbar sind, gemäß dem Oberbegriff von Anspruch 1 sowie eine entsprechende Reinigungsanlage gemäß dem Oberbegriff von Anspruch 9.

Das gezeigte Verfahren bzw. die gezeigte Reinigungsanlage Ist besonders geeignet für Membranmodule, welche in Belebungsbecken von biologischen Kläranlagen eingesetzt werden. Die Kombination eines Belebungsbeckens mit einer Partikel abfiltrierenden Membran zur Schtammrückhaltung wird als Membranbioreaktor System bezeichnet. Die Schtammrückhaltung und die Abtrennung des gereinigten Abwassers erfolgt durch den Einsatz von Mikrofiltrations- oder Ultrafiltrationsmembranmodulen, die direkt in das Belebungsbecken eingetaucht sind oder in einem separaten Becken untergebracht sind. Neben der Platzersparnis durch den Wegfall des Nachklärbeckens kann mit Hilfe der Membranen die biologische Stufe mit einer Schlammtrockensubstanz von ca. 6-20 g/l betrieben werden, was einerseits die Größe des Belebungsbeckens deutlich vermindert und andererseits durch den Filtrationseffekt eine äußerst hohe Reinwasserqualität in bezug auf Bakterien, Keime und abfiltrierbare Stoffe erzeugt.

Bei diesen sogenannten Niedrig-Energie-Verfahren erfolgt je nach System eine kontinuierliche Abreinigung der Membranoberfläche und der Module durch den cross flow, der mit Hilfe einer unter den Modulen angebrachten und mit diesen mechanisch verbundenen Belüftungseinrichtung erzeugt wird oder in-situ, indem Wasser oder eine Reinigungslösung über eine Dosiereinheit permeatseitig in und durch die Membrane gefördert wird. Die Menge an Reinigungslösung, die durch die Membrane in den Reaktor gelangt, ist sehr gering, sodass eine Beeinträchtigung der biologischen Reinigungsleistung nicht eintritt. Ist die gewählte Einwirkzeit verstrichen, wird die restliche Reinigungslösung aus den Membranen abgezogen und anschließend die Filtration wieder in Betrieb genommen. Dieser Vorgang kann mehrmals je nach Erfordernis wiederholt werden. Während der Zeit der Reinigung übemehmen die verbleibenden Module vollständig die Filtration.

Die in-situ-Reinigungen werden mit sehr geringen Chemikalienkonzentrationen durchgeführt. Mit diesen automatisch ablaufenden Reinigungsmaßnahmen kann der Saugdruck für lange Zeit auf niedrigem Niveau gehalten werden. Über längere Zeiträume von ca. einem Jahr lässt sich der langsame Anstieg des Saugdruckniveaus nicht vermeiden. Eine ergänzende Grundreinigung wird erforderlich, die bislang weitestgehend manuell durchgeführt wurden, indem die Membranmodule aus dem Membranbehätter oder Belebungsbecken entnommen, überprüft, gereinigt und ggf. ausgetauscht wurden.

Derartige Verfahren bzw. Anlagen zur Grundreinigung sind etwa aus der EP 0 951 935 A2 bekannt. Diese Veröffentlichung zeigt einerseits ein erstes Verfahren, bei dem ein Membranmodul in aufeinanderfolgenden Verfahrensschritten jeweils in verschiedene Reinigungsbecken getaucht wird, die entweder mit Reinigungslösungen oder mit Spülwasser gefüllt sind. In einem zweiten Verfahren wird gezeigt, dass das zu reinigende Membranmodul während der gesamten Reinigung in einem einzigen Behälter verbleibt, jedoch die Befüllung des Behälters, nämlich die Wasch- und Spülflüssigkeiten, ausgetauscht wird.

Nachteilig bei diesen Verfahren ist, dass durch ein alleiniges Eintauchen der Membranmodule in die Reinigungslösung oder in das Spülwasser eine Abreinigung von Feststoffen und Schlamm nur ungenügend oder nur mit hohem Chemikalieneinsatz möglich ist.

Weiters zeigt die JP-A-09103660 einen verschließbaren Reinigungsbehälter für Membranmodule, welcher eine Einrichtung zum Besprühen der Membranmodule aufweist. Allerdings weist der Reinigungsbehälter zusätzliche Belüftungseinrichtungen aus perforierten Rohren (in der Fig. strichliert dargestellt) mit Versorgungsleitungen für die Belüftung des Reinigungsbehälters auf.

Eine Aufgabe der vorliegenden Erfindung besteht nun darin, ein Verfahren und eine entsprechende Reinigungsanlage zu schaffen, wo auf einfache Weise eine Reinigung der Membranen mit möglichst wenig Chemikalienaufwand und wenig anfallenden Abfallstoffen erzielt wird.

Diese Aufgabe wird erfindungsgemäß durch ein Verfahren nach Anspruch 1 bzw. durch eine Reinigungsanlage nach Anspruch 9 gelöst.

Dadurch, dass eine mechanische Vorreinigung durch Besprühen der Membranmodule erfolgt, müssen in der Folge weniger Chemikalien eingesetzt werden. Die Durchführung in einem verschlossenen Behälter stellt sicher, dass kein Abwasser, keine Chemikalien und keine Abluft unkontrolliert in die Umgebung austreten. Die Reinigung vereinfacht sich, da die gesamte Reinigung automatisiert gemäß dem Reinigungsprogramm abläuft und etwa ein händisches Abspritzen der Membranmodule wegfällt.

Da der Reinigungsbehälter belüftet wird, wird hierdurch die Ablösung von an den Membranen abgelagerten Stoffen erleichtert und die chemische Reaktion unterstützt. In einfacher Weise geschieht dies eben, wenn die Belüftung mittels einer Belüftungseinrichtung des Membranmoduls erfolgt.

Als Reinigungsmitel für die mechanische Reinigung kommen in erster Linie Wasser, wie das durch die Membranen selbst erzeugt Permeat in Frage, aber natürlich auch Trinkwasser oder auf anderem Wege hergestelltes Brauchwasser. Vorstellbar ist auch die Beimengung von anderen Stoffen.

Weitere vorteilhafte Ausgestaltungen der Erfindung sind in den abhängigen Ansprüchen angegeben.

Durch das Rückführen des beim Besprühen entstehenden Abwassers in die Wasserbehandlungsanlage ist keine eigene Abwasserbehandlung für die Reinigungsanlage notwendig.

Damit eine effektive Vorreinigung durch Entfernen von anhaftendem Schlamm erreicht wird, wird das Besprühen vorzugsweise mit einem Druck größer 1 bar (=10⁵ Pa) durchgeführt.

Zur Vermeidung von Belastungen der Umgebung mit Chemikaliendämpfen kann vorgesehen sein, dass die bei der chemischen Reinigung entstehenden Gase, wie Chemikaliendämpfe, einem Abluftentsorgungssystem zugeführt werden.

Zur Erhöhung der Reaktionsfähigkeit kann vorgesehen sein, dass das Reinigungsmittel (sowohl für das Besprühen als auch für die chemische Reinigung) erwärmt wird.

Um durch Wiederverwendung der chemischen Reinigungsmittel Reinigungsmittel zu sparen kann vorgesehen sein, dass das Reinigungsmittel nach der Verwendung in einem ersten Reinigungsbehälter, insbesondere nach einer Aufbereitung, wie einer Feststoffabscheidung, direkt einem weiteren Reinigungsbehälter zugeführt wird oder dass das Reinigungsmittel nach der Verwendung in einem ersten Reinigungsbehälter, insbesondere nach einer Aufbereitung, wie einer Feststoffabscheidung, wieder dem Ansetzbehälter für Reinigungsmittel zugeführt wird. Als Feststoffabscheidung kommen z.B. Filterung, Sedimentation oder Flotation in Frage.

Nach der chemischen Reinigung kann das Membranmodul durch Besprühen mit Spülflüssigkeit, wie beispielsweise Wasser, gespült werden.

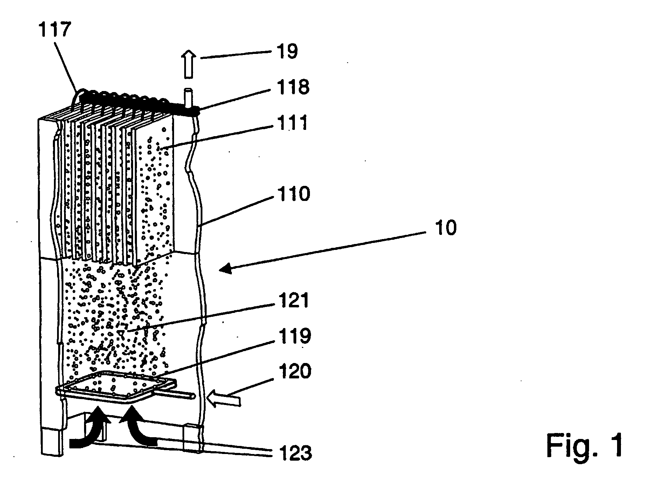

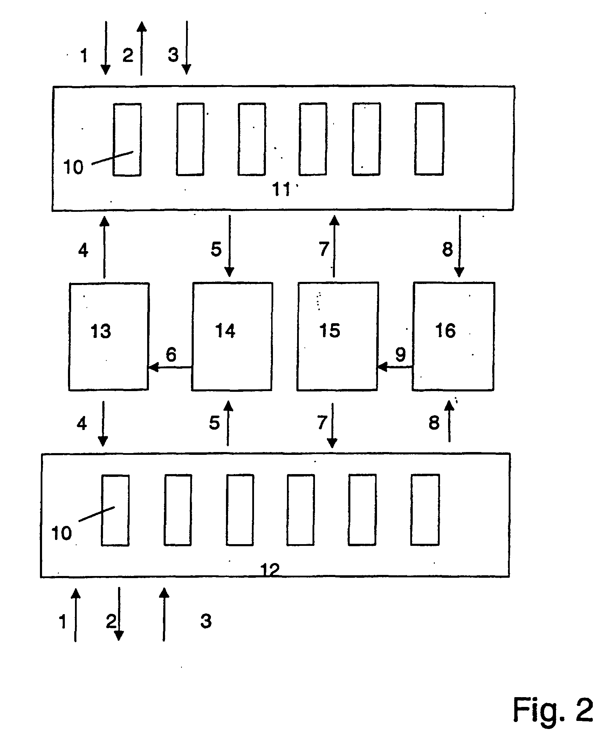

Die Erfindung wird anhand der schematischen Figuren 1 und 2 beispielhaft beschrieben.
Fig. 1 zeigt die Skizze eines in Betrieb befindlichen Membranmoduls mit flächigen Membranfiltern (Plattenmembranen),
Fig. 2 zeigt den Aufbau einer erfindungsgemäßen Reinigungsanlage für Membranmodule.

Das in Fig. 1 beispielhaft dargestellte Membranmodul 10 besteht aus einem Reaktorbehälter 110, in dessen oberem Bereich mehrere Membranfilter 111, hier beispielhaft in flacher Ausführung, senkrecht und parallel zueinander in einem bestimmten Abstand voneinander angeordnet sind.

Die in den Innenraum der Membranfilter 111 gelangende Flüssigkeit wird beim Durchtritt durch die Membranen gereinigt, von dort als Permeat über eine Leitung 117 in die Permeatsammelleiste 118 des Membranmoduls 10 gefördert, von wo aus das Permeat 19 über eine Sammelleitung abgeleitet wird. Im unteren Bereich des Membranmoduls 10 ist ein Belüfter 119 vorgesehen, der beispielsweise Umgebungsluft 120, die mit einem Kompressor verdichtet wird, in die zu reinigende Flüssigkeit einbringt.

Die Luft steigt durch den Aufströmkanal 121 und zwischen den Membranfiltem 111 nach oben und weiter an die Beckenoberfläche des Belebungsbeckens. Durch die entstehende Mammutpumpe wird im Fußbereiches des Reaktorbehälters 110 belebter Schlamm (Suspension 123) eingesogen. Der aufwärts mitgeführte belebte Schlamm tritt oben aus dem Reaktorbehälter 110 aus und mischt sich in die umgebende Flüssigkeit ein.

Die erfindungsgemäße Reinigungsanlage für Membranmodule 10 besteht gemäß Fig. 2 im Wesentlichen aus zwei als Reinigungsbecken 11, 12 ausgebildeten Reinigungsbehältem, welche mit den Ansetzbehältern 13, 15 über Leitungen 4, 7 verbunden sind. In den Ansetzbehältem werden die verdünnten Lösungen, Zitronensäure, Salzsäure oder andere geeignete Säuren sowie Natriumhypochlorit mit vorheriger pH-Wert-Einstellung mittels Natronlauge oder andere geeignete Reinigungsmittel in der notwendigen Menge und Konzentration angesetzt. Diese Chemikalien werden nacheinander in den beiden Reinigungsbecken 11, 12 verwendet. Die Ansetzbehälter 13, 15 sind so verschaltet, dass Chemikalien wahlweise den beiden Reinigungsbecken 11, 12 zugeführt werden können. Die Chemikalien können nachgeschärft und beim Rückpumpen in die Ansetzbehälter über Leitungen 5, 8 mittels Filter 14, 16 gereinigt werden.

Um diese Reinigung möglichst in kurzer Zeit durchführen zu können, wird ein Reinigungsbecken für jeweils 1 bis n Membranmodule 10, hier 6 Stück Membranmodule 10, vorgesehen. Somit werden 1 bis n Stück Membranmodule zeitgleich gereinigt. Die Dauer einer Reinigung ist vorwählbar und kann z.B. 2-24 Stunden betragen. Zur Minimierung des Bedienaufwandes wird der Reinigungsvorgang automatisiert.

Das erfindungsgemäße Verfahren wird dann durchgeführt, wenn der Saugdruck der in Betrieb befindlichen Membranen zwischen 0,3 und 0,8x10⁵ Pa liegt.

Die zu reinigenden Membranmodule werden hydraulisch von den restlichen der Filtrationsstraße der Kläranlage isoliert. Die anderen Membranmodule der betreffenden Straße arbeiten weiter im normalen Filtrationsbetrieb. Die zu reinigenden Membranmodule werden durch das Ziehen von Sicherungssplints gelöst. An mindestens zwei Schnellverschlusskupplungen (1 x für Permeat, 1 x für Luft) werden die Prozessmedien manuell entkoppelt und die Öffnungen an der Sammelleitung mit Blindstopfen verschlossen.

Dann werden die Membranmodule 10 mit Hilfe eines Portalkranes in das jeweilige Reinigungsbecken 11, 12 an vorgefertigte Stellplätze verbracht, dort fest positioniert und wieder an eine Luftleitung 3 angeschlossen. Die Stellplätze sind modulspezifisch ausgeführt, d.h. passgenau und mit Schnellschlusskupplungen für die Versorgungs- und Entsorgungsleitungen für die Medien (Luft 3 zur Belüftung, gegebenenfalls Reinigungsmittel zur permeatseitigen Reinigung der Membranen). Die Stellplätze sind mit einem Düsensystem rings um jeden Membranmodul 10 über die gesamte Höhe und Länge verteilt ausgerüstet, mit dem die Membranmodule 10 unter Verwendung von Permeat automatisch rundum abgeduscht und von groben Schmutzstoffen befreit werden.

Die Luft 3, welche durch die Belüftungseinrichtung des Membranmoduls eingebracht wird, reicht zur intensiven Durchmischung der Medien im Reinigungsbecken aus. Es wird aber auch der Anschluss an die Permeatleitungen vorgesehen, so dass eine Reinigungslösung im Bedarfsfall durch die Membranen der Membranmodule 10 gepumpt werden kann.

Nach dem Positionieren und Anschließen der Membranmodule 10 wird das Reinigungsbecken mit einer luftdichten Abdeckung verschlossen und ein automatisch vorwählbares Programm, das auf einer SPS-Steuerung basiert, gestartet.

Mit diesem Programm können die einzelnen Verfahrensschritte wie auch die dazu benötigte Zeit vorgewählt und variiert und anschließend automatisch ausgeführt werden. Das Programm steuert auch die Wiederverwendung der Chemikalien. Damit ist während des gesamten Reinigungsvorganges kein manuelles Eingreifen mehr notwendig.

Zuerst werden die Membranmodule 10 im Reinigungsbecken 11, 12 mit Spülwasser 1, wie z.B. Permeat, mittels der Sprühvorrichtung geduscht. Dies dient der mechanischen Entschlammung. Die Zeitintervalle für die einzelnen Spülzyklen sind frei vorwählbar. Für diese Wasserspülung werden z.B. 2 Stunden gewählt. An den Wänden des Reinigungsbeckens sowie gegebenenfalls zwischen den Stellplätzen für die Membranmodule 10, an der Abdeckung des Reinigungsbeckens sowie am Boden des Reinigungsbeckens sind über die gesamte Höhe des Reinigungsbeckens Sprühdüsen installiert, die beim Umpumpen des Spülwassers mit außenliegenden Pumpen die Reinigung bewirken.

Die Reinigungsschächte sind mit einem schrägen Boden sowie einem Pumpensumpf ausgeführt, sodass mit einer weiteren außenliegenden Pumpe das verschmutzte Wasser 2 in einfacher Weise abgezogen werden kann. Dieses Wasser 2 kann der Kläranlage zugeführt werden, da es keine chemischen Verunreinigungen enthält.

Anschliessend erfolgt die chemische Reinigung der Membranmodule 10. Abhängig von der Art der Verschmutzung kommen verschiedene Reinigungsmittel in Betracht. Diese können oxidierend wirken zur Entfernung organischer Verunreinigungen oder auch im sauren Bereich wirken zur Ablösung anorganischer Beläge.

Die Umwälzung des Inhaltes der Reinigungsbecken 11, 12 erfolgt mittels einer Pumpe, mit welcher auch der Transport der Reinigungslösung vom Ansetzbehälter 13, 15 in das Reinigungsbecken erfolgt. In die Umwälzleitung ist ein Wärmetauscher integriert, der die Reinigungslösung auf der gewünschten Temperatur hält. Neben der Umwälzung des Inhaltes mittels der Pumpe erfolgt die Durchmischung und der Feststoffaustrag aus den Membranmodulen 10 durch Betrieb der Belüftungseinrichtungen 119 der Membranmodule 10, die ebenfalls durch das Programm gesteuert werden. Die Drucklufterzeugung erfolgt durch hierfür vorgesehene Gebläse.

Im Reinigungsbecken 11, 12 sind Messeinrichtungen für den pH-Wert, das Redoxpotential sowie den Füllstand angeordnet. Spülflüssigkeitsverluste werden durch Permeat 1 ersetzt. Der Chemikalienersatz erfolgt automatisch, geregelt aufgrund der Messergebnisse der Messeinrichtungen für den pH-Wert und das Redoxpotential. Die Dosierung der Chemikalien erfolgt über Dosierpumpen aus den jeweiligen Ansetzbehältern 13, 15.

Im Folgenden wird ein möglicher chemischer Reinigungszyklus beschrieben. Zuerst wird das erste Reinigungsbecken 11 mit z.B. verdünnter Zitronensäure (1%-ige Zitronensäure, mit Salzsäure auf einen pH-Wert von 2-3 eingestellt) gefüllt. Dann erfolgt ein Aufheizen bzw. Halten (wenn die Chemikalien bereits vor der Reinigung auf die gewünschte Temperatur gebracht wurden) der Lösung im Reinigungsbecken auf eine Temperatur im Bereich von 20-40°C. Die Einwirkzeit wird mit z.B. 14 Stunden gewählt. Dabei kann nach Bedarf belüftet werden, vorzugsweise intermittierend. Die Entleerung des Reinigungsbeckens 11 erfolgt mittels einer Pumpe über einen Filter 14 oder eine sonstige geeignete Apparatur zum Abscheiden von Verunreinigungen in den Ansetzbehälter 13 zurück. Jetzt steht diese Lösung für das zweite Reinigungsbecken 12 zur Verfügung.

Das erste Reinigungsbecken 11 wird nun zum Spülen der Membranmodule 10 über die Sprühdüsen Permeat eingeleitet. Dieser Vorgang kann ebenfalls mit Umpumpen des Wassers sowie mit diskontinuierlichem Lufteintrag unterstützt werden. Für diesen Vorgang werden z.B. 2 Stunden vorgesehen. Das gebrauchte Spülwasser kann wieder der Kläranlage zugeführt werden.

Anschließend wird das Reinigungsbecken 11 mit z.B. verdünnter Natriumhypochloritlösung (0,5%-ige Chlorlösung, hergestellt aus Natriumhypochlorit, mit Natronlauge auf pH-Wert 11 eingestellt) aus dem Ansetzbehälter 15 gefüllt. Die Einwirkzeit beträgt z.B. 4 Stunden bei diskontinuierlicher Belüftung. Die Entleerung des Reinigungsbeckens 11 erfolgt mittels einer Pumpe über einen Filter 16 oder eine sonstige geeigneter Apparatur zum Abscheiden von Verunreinigungen in den Ansetzbehälter 15 zurück. Jetzt steht diese Lösung für das zweite Reinigungsbecken 12 zur Verfügung.

Alternativ oder zusätzlich zu Filtern 14, 16 können die Ansetzbehälter 13, 15 so bemessen werden, dass in diesen etwaiger aus den Reinigungsbecken 11, 12 eingetragener Schlamm abgesetzt wird. Diese Sedimente werden über einem im Ansetzbehälter integrierten Schlammtrichter abgezogen und mit Pumpen der Überschussschlammeindickung der Kläranlage zugeführt. Die Ansetzbehälter 13, 15 sind mit Messeinrichtungen für den Füllstand versehen, welche automatisch die Zufuhr von Ersatzwasser zum Ausgleich der Entschlammungsverluste regeln.

Permeatseitig können bei der chemischen Reinigung zusätzlich ein oder nacheinander mehrere Chemikalien zur inneren Reinigung der Membranen unterstützend eingebracht werden.

In das erste Reinigungsbecken 11 wird nun wieder zum Spülen der Membranmodule 10 über die Sprühdüsen Permeat eingeleitet. Für diesen Vorgang werden z.B. 2 Stunden vorgesehen. Das Spülwasser kann der Kläranlage zugeführt werden.

Nach der Reinigung werden die Membranmodule 10 wieder von der Luft- bzw. Permeatleitung gelöst, mit Hilfe des Portalkranes aus dem Reinigungsbecken 11, 12 herausgezogen und wieder an ihren ursprünglichen Platz in der Kläranlage verbracht, wo sie wieder an eine Luft- und an eine Permeatleitung angekoppelt werden.

Eine Nachreinigung nach den chemischen Verfahrensschritten kann durch Füllen des Reinigungsbeckens mit Permeat, Brauchwasser oder Trinkwasser, gegebenenfalls unter Verwendung der Umwälzpumpe zum Umwälzen, und/oder mit Besprühen durch die Sprühdüsen und Belüften erfolgen, wobei das Schlammwasser wieder in das Belebungsbecken der Kläranlage abgegeben werden kann.

Da das Reinigungsbecken abgedeckt ist, hat eine kontrollierte Be- und Entlüftung zu erfolgen, bei welcher die Abluft behandelt wird und somit keine Emissionen direkt in den Umgebungsraum der Reinigungsanlage gelangen. Um eine Schaumbildung im Reinigungsbecken zu verhindern, kann eine weitere Besprühungseinrichtung vorgesehen sein.

Die erfindungsgemäße Anlage kann in zweckmäßiger Weise als abgetrennter Teil des Belebungsbeckens einer Kläranlage ausgeführt sein.

Das erfindungsgemäße Verfahren eignet sich für den Einsatz in biologischen Kläranlagen, darüber hinaus auch in anderen Wasserbehandlungsanlagen, in welchen Membranen zur Reinigung eingesetzt werden, wie Trinkwasserautbereitungsanlagen, sowie generell für alle Anwendungsfälle zur Partikel- und/oder Mikroorganismenabtrennung mittels Membranen. Das erfindungsgemäße Verfahren ist auch nicht auf bestimmte Arten von Membranen eingeschränkt, sondern für verschiedene Arten von Membranen, wie für Platten-Hohlfaser-, Kissen- und Rohrmembranen, sowie für Membranen aus organischem oder aus keramischem Material anwendbar.

## Patentansprüche

1. Verfahren zum Reinigen von Membranmodulen (10), welche in einer Wasserbehandlungsanlage einsetzbar sind, wobei die Membranmodule in einen Reinigungsbehälter (11, 12) verbracht worden, In welchem eine chemische Reinigung der Membranmodule stattfindet, der Reinigungsbehälter (11, 12) nach dem Einbringen von zumindest einem Membranmodul (10) verschlossen und ein Reinigungsprogramm durchgeführt wird, wobei das Reinigungsprogramm zumindest vor einem Verfahrensschritt der chemischen Reinigung den Verfahrensschritt des mechanischen Reinigens des Membranmoduls durch Besprühen mit Reinigungsmittel beinhaltet, wobei der Reinigungsbehälter (11, 12), **dadurch gekennzeichnet, daß** die Belüftung mittels einer Belüftungseinrichtung des Membranmoduls (10) erfolgt.

2. Verfahren nach Anspruch 1, **dadurch gekennzeichnet, dass** das Besprühen mit einem Druck größer 1 bar durchgeführt wird.

3. Verfahren nach Anspruch 1 oder 2, **dadurch gekennzeichnet, dass** das während dem Besprühen gebildete Abwasser in die Wasserbehandlungsanlage, insbesondere in ein Belebungsbecken, zurückgsführt wird.

4. Verfahren nach einem der Ansprüche 1 bis 3, **dadurch gekennzeichnet, dass** das Membranmodul (10) durch Einwirken eines flüssigen Reinigungsmittels, mit welchem der Reinigungsbehälter gefüllt wird, chemisch gereinigt wird, wobei die entstehenden Gase, wie Chemikaliendämpfe, einem Abluftentsorgungssystem zugeführt werden.

5. Verfahren nach einem der Ansprüche 1 bis 4, **dadurch gekennzeichnet, dass** das Reinigungsmittel erwärmt wird.

6. Verfahren nach einem der Ansprüche 4 bis 5, **dadurch gekennzeichnet, dass** das Reinigungsmittel nach der Verwendung in einem ersten Reinigungsbehälter (11), insbesondere nach einer Aufbereitung, wie einer Filterung (14, 16), einem weiteren Reinigungsbehälter (12) zugeführt wird.

7. Verfahren nach einem der Ansprüche 4 bis 5, **dadurch gekennzeichnet, dass** das Reinigungsmittel nach der Verwendung in einem ersten Reinigungsbehälter (11), insbesondere nach einer Aufbereitung, wie einer Filterung (14, 16), einem Ansetzbehälter (13, 15) für Reinigungsmittel zugeführt wird.

8. Verfahren nach einem der Ansprüche 1 bis 7, **dadurch gekennzeichnet, dass** das Membranmodul (10) nach einem Verfahrensschritt der chemischen Reinigung durch Besprühen mit Spülflüssigkeit, wie beispielsweise Wasser, gespült wird.

9. Reinigungsanlage zum Reinigen von Membranmodulen (10), welche in einer Wasserbehandlungsanlage eingesetzt werden, nach einem der Ansprüche 1 bis 7, wobei die Reinigungsanlage zumindest einen Reinigungsbehälter (11, 12) aufweist, welcher für eine chemische Reinigung der Membranmodule geeignet ist und zumindest ein Membranmodul aufnehmen kann, wobei der Reinigungsbehälter (11, 12) mit einer Abdeckung verschließbar, insbesondere luftdicht verschließbar, ist, und wobei eine Steuereinrichtung zur automatisierten Ausführung eines Reinigungsprogramms sowie eine Sprühvorrichtung zum mechanischen Reinigen des Membranmoduls (10) durch Besprühen mit Reinigungsmittel, wie beispielsweise Wasser, vorgesehen ist, **dadurch gekennzeichnet, dass** der Reinigungsbehälter (11, 12) Anschlüsse für eine am Membranmodul (10) angebrachte Belüftungseinrichtung (119) aufweist, sodass der Reinigungsbehälter (11, 12) mit der Belüftungseinrichtung (119) des Membranmoduls (10) belüftet werden kann.

## Claims

1. A method for cleaning membrane modules (10), which can be implemented in a water treatment installation ; in which the membrane modules are placed into a cleaning tank (11, 12), in which a chemical cleaning of membrane modules is to be carried out, the cleaning tank (11, 12) is closed after the introduction of at least one membrane module (10) and a cleaning programme is carried out, this cleaning programme including, at least, before the step of chemical cleaning of the process, a mechanical cleaning step of the membrane module, consisting in a spraying operation with a cleaning medium ; and in which air is injected into the cleaning tank (11, 12) ; **characterised in that** the injection of air is carried out by means of an air injection installation of the membrane module (10).

2. A method according to claim 1, **characterised in that** the spraying operation is carried out under a pressure in excess of 1 bar.

3. A method according to claim 1 or claim 2, **characterised in that** the aqueous effluent generated from the spraying is recycled to the water treatment installation and, in particular, to an activated-sludge tank.

4. A method according to one of claims 1 to 3, **characterised in that** the membrane module (10) is cleaned chemically through the action of a liquid cleaning medium with which the cleaning tank is filled and wherein the gases produced, such as vapours of chemical compounds, are directed to a system for treating effluent gases.

5. A method according to one of claims 1 to 4, **characterised in that** the cleaning medium is heated.

6. A method according to one of claims 4 to 5, **characterised in that** the cleaning medium, after its use in a first cleaning tank (11) and, in particular, after a treatment such as a filtration (14, 16), is directed to another cleaning tank (12).

7. A method according to one of claims 4 to 5, **characterised in that** the cleaning medium, after its use in a first cleaning tank (11) and, in particular, after a treatment such as a filtration (14, 16) is directed to an additional tank (13, 15) for the cleaning medium.

8. A method according to one of claims 1 to 7, **characterised in that** the membrane module (10) is sprayed, after a chemical cleaning step of the process, with a spraying liquid such as for example water.

9. A cleaning Installation for cleaning membrane modules (10), which are part of a water treatment installation according to one of claims 1 to 7, wherein the cleaning installation includes, at least one cleaning tank (11, 12), which is suitable for the chemical cleaning of the membrane modules and which can accommodate at least one membrane module, wherein the cleaning tank (11, 12) can be closed by a cover and, in particular, with an air-tight cover and wherein a control installation is provided for controlling the automatic implementation of a cleaning programme, as well as a spraying device for ensuring a mechanical cleaning of the membrane module (10) by spraying with a cleaning medium such as, for example, water, **characterised in that** the cleaning tank (11, 12) includes connexions for connecting an air injecting installation (119) of the membrane module (10), in such a manner as to make it possible to inject air into the cleaning tank (11, 12) by means of the air injecting installation (119) of the membrane module (10).

## Revendications

1. Procédé pour nettoyer des modules à membrane (10) qui est susceptible d'être mis en oeuvre dans une installation de traitement d'eau ; dans lequel les modules à membrane sont placés dans une cuve de nettoyage (11, 12), dans laquelle doit s'effectuer un nettoyage chimique des modules à membrane, la cuve de nettoyage (11, 12) est fermée après l'introduction d'au moins un module à membrane (10) et un programme de nettoyage est effectué, ce programme de nettoyage comprenant au moins, avant une étape de nettoyage chimique du procédé, une étape de nettoyage mécanique du module à membrane consistant en une aspersion avec du milieu de nettoyage ; et dans lequel de l'air est injecté dans la cuve de nettoyage (11, 12) ; **caractérisé en ce que** l'injection de l'air se fait à l'aide d'une installation d'injection d'air du module à membrane (10).

2. Procédé selon la revendication 1, **caractérisé en ce que** l'aspersion se fait sous une pression supérieure à 1 bar.

3. Procédé selon la revendication 1 ou la revendication 2, **caractérisé en ce que** l'effluent aqueux généré par l'aspersion est recyclé vers l'installation de traitement d'eau, en particulier, vers une cuve d'épuration par boues activées.

4. Procédé selon l'une des revendications 1 à 3, **caractérisé en ce que** le module. à membrane (10) est nettoyé chimiquement par l'action d'un milieu de nettoyage liquide avec lequel la cuve de nettoyage est remplie et où les gaz produits, tels que des vapeurs de composés chimiques, sont dirigés vers un système de traitement d'effluents gazeux.

5. Procédé selon l'une des revendications 1 à 4, **caractérisé en ce que** le milieu de nettoyage est chauffé.

6. Procédé selon l'une des revendications 4 à 5, **caractérisé en ce que** le milieu de nettoyage, après son utilisation dans une première cuve de nettoyage (11) et, en particulier, après un traitement tel qu'une filtration (14, 16) est acheminé vers une autre cuve de nettoyage (12).

7. Procédé selon l'une des revendications 4 à 5, **caractérisé en ce que** le milieu de nettoyage, après son utilisation dans une première cuve de nettoyage (11) et, en particulier après un traitement tel qu'une filtration (14, 16) est acheminé vers une cuve additionnelle (13, 15) pour le milieu de nettoyage.

8. Procédé selon l'une des revendications 1 à 7, **caractérisé en ce que** le module à membrane (10) est aspergé, après une étape de nettoyage chimique du procédé, avec un liquide d'aspersion comme par exemple l'eau.

9. Installation de nettoyage pour nettoyer des modules à membrane (10) qui font partie d'une installation de traitement d'eau, selon l'une des revendications 1 à 7, où l'installation de nettoyage comprend au moins une cuve de nettoyage (11, 12) qui convient à un nettoyage chimique des modules à membrane et qui peut loger au moins un module à membrane, où la cuve de nettoyage (11, 12) peut être fermée avec un couvercle et, en particulier, avec un couvercle hermétique à l'air et où une installation de contrôle est prévue pour contrôler l'exécution automatique d'un programme de nettoyage ainsi qu'un dispositif d'aspersion pour assurer un nettoyage mécanique du module à membrane (10) par l'aspersion avec un milieu de nettoyage, comme par exemple l'eau, **caractérisé en ce que** la cuve de nettoyage (11, 12) comporte des connexions pour raccorder une installation d'injection d'air (119) du module à membrane (10), de manière à pouvoir injecter de l'air dans la cuve de nettoyage (11, 12) au moyen de l'installation d'injection d'air (119) du module à membrane (10).
